# EUROPEAN PATENT APPLICATION

(11) **EP 4 465 135 A1**
(43) Date of publication of application: **20.11.2024**
(21) Application number: 23305774.4
(22) Date of filing: 16.05.2023
(51) Int. Cl.: G05B 13/02, G05B 19/418, G05B 23/02

(54) **METHOD AND DEVICE FOR MANUFACTURING A SERIES OF PARTS ON A PRODUCTION LINE TAKING INTO ACCOUNT QUALITY DATA AND CARBON FOOTPRINT**

(71) Applicant: BULL SAS, 78340 Les Clayes-Sous-Bois (FR)
(72) Inventor: DELAUTIER, Sébastien, 31170 Tournefeuille (FR); JARRIGE, Pierre, 31470 Fontenilles (FR); TRYNER, Lukas, 530 12 Pardubice (CZ)
(74) Representative: Argyma

(57) **Abstract**

The invention related to a method for manufacturing a series of parts using a manufacturing machine of a production line and a supervision device configured for controlling in real time said manufacturing machine taking into account quality data, carbon footprint and cost, said method comprising the steps of receiving (S1) real time data from said production line, running (S2A) a first prediction algorithm (PA1) to predict quality data on said series of parts in real time, running (S2B) a second prediction algorithm (PA2) to predict a carbon footprint of the series of parts in real time, running (S2C) a third prediction algorithm (PA3) to predict the cost of the series of parts in real time, determining (S3) a set of scenarios based on the predicted carbon footprint and the predicted cost, selecting (S4) at least one scenario in the set of scenarios based on the predicted carbon footprint and/or the predicted cost, manufacturing (S5) the series of parts according to the selected scenario.

## Description

### [Field of the invention]

The field of the invention relates to manufacturing of parts and more particularly to a method and a device for manufacturing a series of parts on a production line. The method and device according to the invention aims at optimizing carbon footprint and costs when manufacturing parts on a production line.

### [Background of the invention]

Nowadays, when manufacturing a series of parts, it is known to use an algorithm to estimate the level of quality of the manufactured series of parts like e.g. the number of expected defects, the types of defects, etc. It is also known to quantify the expected level of carbon dioxide that will be released in the atmosphere to compute a carbon footprint value for the production of said series of parts. It is also known to calculate the expected cost of production of the series of parts. Each of those estimations are performed independently using a dedicated analytical approach based on historical data.

Yet, such estimations may prove to be inaccurate, as they do not take into account live data at part level, and do not allow to determine a manufacturing strategy based on quality parameters, carbon footprint and cost.

It is therefore an object of the present invention to provide a device and method for avoiding those drawbacks.

### [Summary of the invention]

To this end, the present invention concerns a method for manufacturing a series of parts using a manufacturing machine of a production line and a supervision device configured for controlling in real time said manufacturing machine taking into account quality data, carbon footprint and cost, said method comprising the steps of:
- receiving real time data from said production line,
- running a first prediction algorithm using the received real time data to predict quality data on said series of parts in real time, said first prediction algorithm having been trained using at least one quality dataset comprising historical quality data,
- running a second prediction algorithm using the received real time data and the predicted quality data to predict a carbon footprint of the series of parts in real time, said second prediction algorithm having been trained using at least one carbon footprint dataset comprising carbon historical footprint data,
- running a third prediction algorithm using the received real time data, the predicted quality data and the predicted carbon footprint to predict the cost of the series of parts in real time, said third prediction algorithm having been trained using at least one cost dataset comprising historical cost data,
- determining a set of scenarios based on the predicted carbon footprint and the predicted cost,
- selecting at least one scenario in the set of scenarios based on the predicted carbon footprint and/or the predicted cost,
- manufacturing the series of parts according to the selected scenario.

The device according to the invention allows accurate predictions using live production data at part level (i.e. for each part) and not only global assumptions (i.e. for each batch of parts) as in the prior art. Overall decision making can be made based on mixing of all parameters at the same time (quality parameters, carbon footprint, cost) to provide trade-off and accurate global view, relying on live production data. In the frame of quality, carbon footprint and cost optimization in the manufacturing industry, the invention provides a system to make the best trade-off between defect repair and part rebuild, minimizing the lead-time, carbon footprint and part cost. Each produced part is assessed during production through live data and decision-making for its quality, cost and carbon footprint, with traceability along the production process, and with decisions-making help to optimize cost and carbon. In addition, extended data may be provided to augmented reality for the worker: location of parts, defects on parts and repair actions to be carried out.

According to an aspect of the invention, the training of the first prediction algorithm is done using at least one quality dataset comprising historical quality data, preferably continuously.

According to an aspect of the invention, the training of the second prediction algorithm is done using at least one carbon footprint dataset and the quality data predicted by the first prediction algorithm, preferably continuously, said at least one carbon footprint dataset comprising carbon historical footprint data.

According to an aspect of the invention, the training of the third prediction algorithm is done using at least one cost dataset, the quality data predicted by the first prediction algorithm and the carbon footprint data predicted by the second prediction algorithm, preferably continuously, said at least one cost dataset comprising historical cost data.

Preferably, the first prediction algorithm, the second prediction algorithm and the third prediction algorithm are implemented by a same device.

In an embodiment, the step of determining a set of scenarios is carried out by the device.

In an embodiment, the step of identifying the scenario is carried out by the device.

In an embodiment, the step of selecting one of the identified scenarios is carried out by the device so that the method is fully automated.

In a preferred embodiment, the step of selecting is carried out by the supervision device and comprises comparing for each scenario the predicted carbon footprint and/or the predicted cost to rank the scenarios based on their predicted carbon footprint and/or their predicted cost.

Advantageously, the method further comprises selecting only the scenarios for which the predicted carbon footprint is below a predetermined carbon footprint threshold and/or the scenarios for which the predicted cost is below a predetermined cost threshold.

Advantageously, the step of selecting comprises selecting the scenario with the least global carbon footprint for the series of parts and/or the scenario with the least global cost for the series of parts.

Advantageously, the step of predicting the quality data comprises determining the defect type and/or the expected location of the defect part in the factory and/or the position of the defect of the part and/or the probability of repair.

Advantageously, the step of predicting the carbon footprint of the series of parts comprises determining the quantity of direct emission of carbon dioxide and/or the quantity of indirect emissions of carbon dioxide and/or repair carbon footprint for each predicted defect.

Advantageously, the step of predicting the cost of the series of parts comprises determining the cost of producing the series of parts with the predicted at least one defect and/or the cost of repairing the series of parts with the predicted at least one defect and/or the cost of modifying the specifications of the series of parts to avoid the predicted at least one defect.

The invention also relates to a computer program comprising instructions which, when the program is executed by a computer, cause the computer to carry out the steps of the method as presented here before.

The invention also relates to a supervision device for guiding the manufacturing of a series of parts by a manufacturing machine of a production line, said device being configured to:
- train a first prediction algorithm using at least one quality dataset comprising historical quality data,
- train a second prediction algorithm using at least one carbon footprint dataset comprising carbon historical footprint data,
- train a third prediction algorithm using at least one cost dataset comprising historical cost data,
- receive real time data from said production line,
- run the trained first prediction algorithm using the received real time data to predict quality data on said series of parts in real time,
- run the trained second prediction algorithm using the received real time data and the predicted quality data to predict a carbon footprint of the series of parts in real time,
- run the trained third prediction algorithm using the received real time data, the predicted quality data and the predicted carbon footprint to predict the cost of the series of parts in real time,
- determine a set of scenarios based on the predicted carbon footprint and the predicted cost.

Advantageously, the device is further configured to select at least one scenario in the set of scenarios based on the predicted carbon footprint and/or the predicted cost.

Advantageously, the device is further configured to compare for each scenario the predicted carbon footprint and/or the predicted cost to rank the scenarios based on their predicted carbon footprint and/or their predicted cost.

Advantageously, the device is further configured to select only the scenarios for which the predicted carbon footprint is below a predetermined carbon footprint threshold and/or the scenarios for which the predicted cost is below a predetermined cost threshold.

Advantageously, the device is further configured to select the scenario with the least global carbon footprint for the series of parts and/or the scenario with the least global cost for the series of parts.

Advantageously, the device is further configured to, when predicting the occurrence of at least one defect comprises, determine the defect type and/or the expected location of the defect part in the factory and/or the position of the defect of the part and/or the probability of repair.

Advantageously, the device is further configured to, when predicting the carbon footprint of the series of parts, determine the quantity of direct emission of carbon and/or the quantity of indirect emissions of carbon and/or repair carbon footprint for each predicted defect.

Advantageously, the device is further configured to, when predicting the cost of the series of parts, determine the cost of producing the series of parts with the predicted at least one defect and/or the cost of repairing the series of parts with the predicted at least one defect and/or the cost of modifying the specifications of the series of parts to avoid the predicted at least one defect.

Advantageously, the device is further configured to automatically control a manufacturing machine to manufacture the series of parts according to the selected scenario.

The invention also relates to a system for manufacturing at least one batch of parts comprising at least one type of parts, said system comprising a device as presented before and a manufacturing machine configured to manufacture the parts for all types according to a scenario selected in the set of scenarios determined by the device.

### [Brief description of the drawings]

These and other features, aspects, and advantages of the present invention are better understood with regards to the following Detailed Description of the Preferred Embodiments, appended Claims, and accompanying Figures, where:
Figure 1 schematically illustrates an embodiment of the system according to the invention.

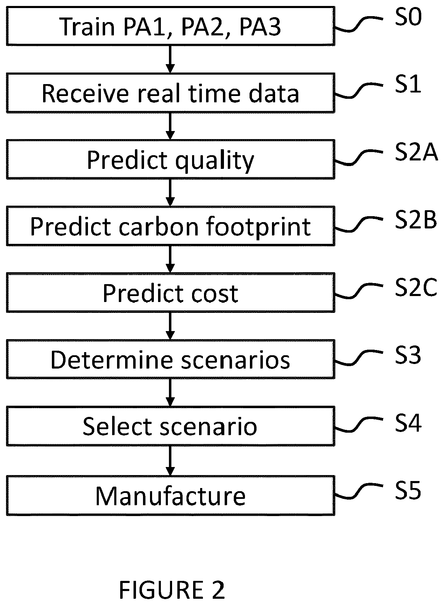

Figure 2 schematically illustrates an embodiment of the method according to the invention.

### [Detailed description]

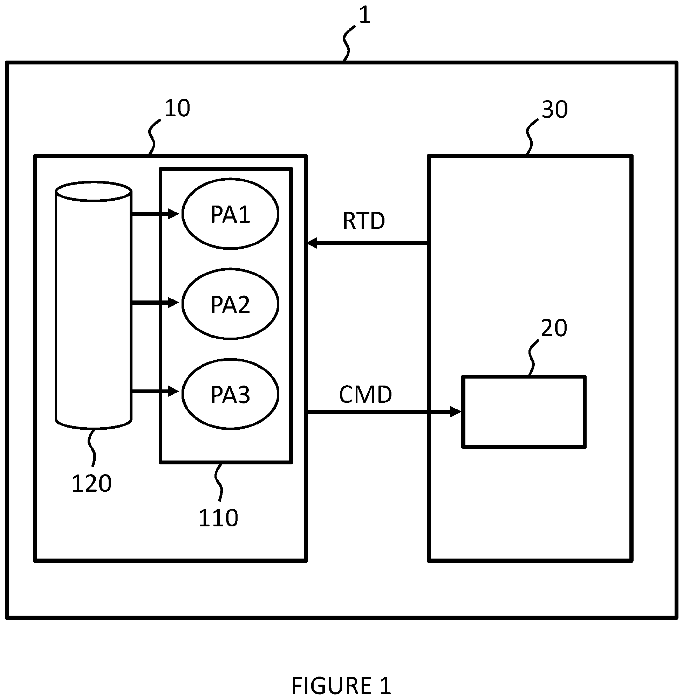

Figure 1 illustrates an example of a system 1 according to the invention. The system 1 allows to manufacture one or several series of parts, for example of different types, in an optimized manner regarding quality, carbon dioxide and costs simultaneously. The parts that need to be manufactured are called hereafter "targeted parts". A part is characterized by its type. Parts are manufactured in series. Each series may comprise a different number of parts.

The system 1 comprises a supervision device 10 and a manufacturing machine 20 installed on a production line 30.

### Supervision device 10

The supervision device 10 comprises a management module 110 and a database 120. The management module 110 allows to define one or a plurality of scenarios for controlling the manufacturing machine 20 in order to optimize the carbon footprint and the cost of manufacturing a given series of parts.

The management module 110 is configured to train a first prediction algorithm PA1 related to the expected quality of the series of parts, a second prediction algorithm PA2 related to the expected carbon footprint of the series of parts and a third prediction algorithm PA3 related to the expected cost of the series of parts. To this end, the management module 110 operates one or several neural networks based on artificial intelligence. The first prediction algorithm PA1, the second prediction algorithm PA2 and the third prediction algorithm PA3 are trained using datasets stored in the database 120.

The management module 110 is configured to run the trained first prediction algorithm PA1, the trained second prediction algorithm PA2 and the trained third prediction algorithm PA3 using live data collected in real time and called hereafter "real time data" RTD.

The device 10 uses thus mainly two types of data: static data of targeted parts for training the algorithms PA1, PA2, PA3 and real time data RTD of targeted parts for running the algorithms PA1, PA2, PA3.

The static data are so called "static data" because they are not supposed to evolve during the manufacturing process. Static data are stored in and provided by the database 120, which gathers these data from different sources. The static data are grouped in datasets for training the artificial intelligence.

Preferably, the datasets for training the artificial intelligence comprise production history data, cost data, design data (drawings, studies, ...), carbon dioxide data from previous productions and quality data from previous productions. These data are permanently gathered and stored in a database and used to allow the continuous learning of the algorithms PA1, PA2, PA3. The production history data comprises organized data from past manufactured products, associating for the latter product geometry data, production data, historical measurements and information relating to defects determined by the device 10 during previous manufacturing.

Real-time data from production lines are live data since they do evolve during the manufacturing process. Once received, real time data RTD may be saved in the database 120. Some of the real time data RTD are measurements that need to be acquired regularly from various measurements means, or probes. The device 10 is thus adapted to continuously receive measurements from the manufacturing machine 20. Measurements can be provided from the internal status of the manufacturing machine 20 or from various probes within or connected to the manufacturing machine 20. Real time data RTD, in particular measurements, may be acquired on a regular basis, according to a static or dynamic sample rate. This sample rate shall be set so that the acquired measurements really track the physical phenomenon happening at the manufacturing machine 20. This sample rate and the way measurements may be acquired may thus depend on the nature of the underlying physical phenomenon (temperature, pression, video...).

Real time data RTD comprise manufacturing data (part numbers, production drawings, incoming inspections, supplier data, ...), quality inspection data (quality metrics, ...), workers & parts data (GNSS coordinates / location in the factory, location of defects on inspected parts, ...). These real time data RTD are continuously provided to be used by the AI algorithms PA1, PA2, PA3.

Quality metrics may comprise temperature measurements (head and bed), speed and acceleration of the laser emitter, extrusion strength, images and videos from cameras monitoring a manufacturing process, etc. All these measurements can be provided on the flow and capture the instantaneous status of the dynamic process. The device 10 may thus be adapted to continuously receive these measurements from the manufacturing machine 20.

The device 10 is configured to predict the expected quality of the series of parts by running the first trained prediction algorithm PA1 using real time quality data, such as e.g. manufacturing data, quality inspection data and workers & parts data. The prediction of the expected quality comprises at least the prediction of the occurrence of at least one defect on the series of parts. Preferably, the device 10 is configured to, when predicting the occurrence of at least one defect, determine the defect type and/or the expected location of the defect part in the factory and/or the position of the defect of the part and/or the probability of repair.

The device 10 is configured to predict the carbon footprint of the series of parts by running the second trained prediction algorithm PA2 using some of the received real time data RTD, such as e.g. energetical consumption data and raw material data (oil, ...) of the manufacturing machine 20, and the expected quality data predicted by the first trained prediction algorithm PA1. Preferably, the device 10 is configured to, when predicting the carbon footprint of the series of parts, determine the quantity of direct emission of carbon and/or the quantity of indirect emissions of carbon and/or repair carbon footprint for each predicted defect. By direct emission, it is meant emission from e.g. material, energy, ... By indirect emission, it is meant emission from e.g. transportation, human tasks, ...

The device 10 is configured to predict the cost of the series of parts by running the third trained prediction algorithm PA3 using the received real time data RTD, such as e.g. energetical consumption data and raw material data (oil, ...) of the manufacturing machine 20, the expected quality data predicted by the trained first prediction algorithm PA1 and the expected carbon footprint data predicted by the trained second prediction algorithm PA2. Preferably, the device 10 is configured to, when predicting the cost of the series of parts, determine the cost of producing the series of parts with the predicted at least one defect and/or the cost of repairing the series of parts with the predicted at least one defect and/or the cost of modifying the specifications of the series of parts to avoid the predicted at least one defect.

The device 10 is configured to determine a set of scenarios based on the predicted carbon footprint for the series of parts and the predicted cost for the series of parts.

In a preferred embodiment, the device 10 is further configured to select at least one scenario in the set of scenarios based on the predicted carbon footprint and/or the predicted cost, to compare for each scenario the predicted carbon footprint and/or the predicted cost to rank the scenarios based on their predicted carbon footprint and/or their predicted cost, to select only the scenarios for which the predicted carbon footprint is below a predetermined carbon footprint threshold and/or the scenarios for which the predicted cost is below a predetermined cost threshold or to select the scenario with the least global carbon footprint for the series of parts and/or the scenario with the least global cost for the series of parts.

In a preferred embodiment, the device 10 is further configured to automatically control the manufacturing machine 20 to manufacture the series of parts according to the selected scenario.

The supervision device 10 comprise at least one processor for implementing some or all of the above-mentioned technical features. In particular, the supervision device 10 may comprise modules of a software functional architecture for decision making and, optionally supervision of the manufacturing machine 20, bearing in mind that in a software architecture, these modules may be independent software programs/processes or parts of a global software program.

### Manufacturing machine 20

The manufacturing machine 20 is configured to manufacture the parts for all types according to a scenario selected in the set of scenarios determined by the device 10.

### Example of implementation

The method will be presented thereafter for a series of a given part, i.e. a batch of parts of the same type, to be produced on a production line. A batch of parts may comprise a single part or a plurality of parts.

Before triggering the manufacturing process, the first prediction algorithm PA1, the second prediction algorithm PA2 and the third prediction algorithm PA3 have already been trained in a step S0 using the historical data stored in the database 120. The first prediction algorithm PA1, the second prediction algorithm PA2 and the third prediction algorithm PA3 are being trained continuously with every new data that is stored in the database 120, in particular subsequently to an ended manufacturing process.

Once the manufacturing process is triggered, the device 10 starts receiving real time data RTD from the production line in a step S1. The device 10 carries out three steps S2A, S2B and S2C of prediction, respectively for the quality of the series, for the carbon footprint of the series and for the cost of the series. These four steps are carried out simultaneously and continuously by the device 10.

In the step S2A, the device 10 runs the first trained prediction algorithm PA1 using the real time data RTD received from the production line to predict in real time quality data on the series of parts to manufacture or being manufactured. Preferably, in step S2A, the device 10 determines the defect type and/or the expected location of the defect part in the factory and/or the position of the defect of the part and/or the probability of repair.

In the step S2B, the device 10 runs the second prediction algorithm PA2 using the real time data RTD received from the production line and the quality data predicted in real time in step S2A to predict in real time a carbon footprint of the series of parts. Preferably, in step S2B, the device 10 determines the quantity of direct emission of carbon and/or the quantity of indirect emissions of carbon and/or repair carbon footprint for each predicted defect.

In the step S2C, the device 10 runs the third prediction algorithm PA3 using the real time data RTD received from the production line, the quality data predicted in real time in step S2A, and the carbon footprint predicted in real time in step S2B to predict the cost of the series of parts. Preferably, in step S2C, the device 10 determines the cost of producing the series of parts with the predicted at least one defect and/or the cost of repairing the series of parts with the predicted at least one defect and/or the cost of modifying the specifications of the series of parts to avoid the predicted at least one defect.

In a step S3, the device 10 determines a set of scenarios based on the predicted carbon footprint and the predicted cost.

In a step S4, the device 10 or a user selects at least one scenario in the set of scenarios based on the predicted carbon footprint and/or the predicted cost. Preferably, production impact such as e.g. delivery delays is provided by the device 10 to help choosing the scenario. Preferably, in step S4, the device 10 compares for each scenario the predicted carbon footprint and/or the predicted cost to rank the scenarios based on their predicted carbon footprint and/or their predicted cost. The device 10 may then select only the scenarios for which the predicted carbon footprint is below a predetermined carbon footprint threshold and/or the scenarios for which the predicted cost is below a predetermined cost threshold. The device 10 may also directly select the scenario having the least global carbon footprint for the series of parts and/or the scenario having the least global cost for the series of parts.

In a step S5, the device 10 or a user controls the manufacturing machine 20 to manufacture the series of parts according to the selected scenario. The manufacturing machine 20 may be programmed or controlled or commanded, either manually by an operator or automatically by the device 10 itself (CMD command on Figure 1), to manufacture the parts for all types according to the selected scenario.

Steps S1-S5 are typically an iterative process. They are iteratively performed based on time windows or bundle of received real time data RTD. At each iteration, new real time data RTD are fed to the device 10 and the determinations made in the various steps S1-S4 are renewed. The succession of these steps shall be short enough to allow rapid iterations allowing to track the dynamic nature of the physical process happening at the manufacturing machine 20 and allowing a reaction on any detected defect as early as possible.

The functional architecture and method according to the invention is designed and optimized to meet this expectation, especially by organizing the manufacturing process as a succession of strategic decisions with regards to quality, carbon footprint and cost, each of which allowing better treatment of the next ones by choosing adapted predictive models.

The device and method according to the invention allow therefore efficiently to decide on a manufacturing scenario so as to reduce carbon footprint and costs.

The invention shall not be limited to the example embodiments explained above but is rather defined by the claims.

## Claims

1. A method for manufacturing a series of parts using a manufacturing machine (20) of a production line (30) and a supervision device (10) configured for controlling in real time said manufacturing machine (20) taking into account quality data, carbon footprint and cost, said method comprising the steps of:
- receiving (S1) real time data (RTD) from said production line (30),
- running (S2A) a first prediction algorithm (PA1) using the received real time data (RTD) to predict quality data on said series of parts in real time, said first prediction algorithm (PA1) having been trained using at least one quality dataset comprising historical quality data,
- running (S2B) a second prediction algorithm (PA2) using the received real time data (RTD) and the predicted quality data to predict a carbon footprint of the series of parts in real time, said second prediction algorithm (PA2) having been trained using at least one carbon footprint dataset comprising carbon historical footprint data,
- running (S2C) a third prediction algorithm (PA3) using the received real time data (RTD), the predicted quality data and the predicted carbon footprint to predict the cost of the series of parts in real time, said third prediction algorithm (PA3) having been trained using at least one cost dataset comprising historical cost data,
- determining (S3) a set of scenarios based on the predicted carbon footprint and the predicted cost,
- selecting (S4) at least one scenario in the set of scenarios based on the predicted carbon footprint and/or the predicted cost,
- manufacturing (S5) the series of parts according to the selected scenario.

2. The method according to claim 1, wherein the step (S4) of selecting is carried out by the supervision device (10) and comprises comparing for each scenario the predicted carbon footprint and/or the predicted cost to rank the scenarios based on their predicted carbon footprint and/or their predicted cost.

3. The method according to the preceding claim, further comprising selecting only the scenarios for which the predicted carbon footprint is below a predetermined carbon footprint threshold and/or the scenarios for which the predicted cost is below a predetermined cost threshold.

4. The method according to the preceding claim, wherein the step (S4) of selecting comprises selecting the scenario with the least global carbon footprint for the series of parts and/or the scenario with the least global cost for the series of parts.

5. The method according to any of the preceding claims, wherein the step (S2A) of predicting the quality data comprises determining the defect type and/or the expected location of the defect part in the factory and/or the position of the defect of the part and/or the probability of repair.

6. The method according to any of the preceding claims, wherein the step (S2B) of predicting the carbon footprint of the series of parts comprises determining the quantity of direct emission of carbon dioxide and/or the quantity of indirect emissions of carbon dioxide and/or repair carbon footprint for each predicted defect.

7. The method according to any of the preceding claims, wherein the step (S2C) of predicting the cost of the series of parts comprises determining the cost of producing the series of parts with the predicted at least one defect and/or the cost of repairing the series of parts with the predicted at least one defect and/or the cost of modifying the specifications of the series of parts to avoid the predicted at least one defect.

8. A computer program comprising instructions which, when the program is executed by a computer, cause the computer to carry out the steps of the method according to any one of the preceding claims.

9. A supervision device (10) for guiding the manufacturing of a series of parts by a manufacturing machine (20) of a production line (30), said device (10) being configured to:
- train a first prediction algorithm (PA1) using at least one quality dataset comprising historical quality data,
- train a second prediction algorithm (PA2) using at least one carbon footprint dataset comprising carbon historical footprint data,
- train a third prediction algorithm (PA3) using at least one cost dataset comprising historical cost data,
- receive real time data (RTD) from said production line (30),
- run the trained first prediction algorithm (PA1) using the received real time data (RTD) to predict quality data on said series of parts in real time,
- run the trained second prediction algorithm (PA2) using the received real time data (RTD) and the predicted quality data to predict a carbon footprint of the series of parts in real time,
- run the trained third prediction algorithm (PA3) using the received real time data (RTD), the predicted quality data and the predicted carbon footprint to predict the cost of the series of parts in real time,
- determine a set of scenarios based on the predicted carbon footprint and the predicted cost.

10. The device (10) according to claim 9, said device being further configured to select the scenario with the least global carbon footprint for the series of parts and/or the scenario with the least global cost for the series of parts.

11. The device (10) according to any of the claims 9 or 10, said device being further configured to, when predicting the occurrence of at least one defect, determine the defect type and/or the expected location of the defect part in the factory and/or the position of the defect of the part and/or the probability of repair.

12. The device (10) according to any of the claims 9 to 11, said device (10) being further configured to, when predicting the carbon footprint of the series of parts, determine the quantity of direct emission of carbon and/or the quantity of indirect emissions of carbon and/or repair carbon footprint for each predicted defect.

13. The device (10) according to any of the claims 9 to 12, said device (10) being further configured to, when predicting the cost of the series of parts, determine the cost of producing the series of parts with the predicted at least one defect and/or the cost of repairing the series of parts with the predicted at least one defect and/or the cost of modifying the specifications of the series of parts to avoid the predicted at least one defect.

14. The device (10) according to any of claims 9 to 13, said device (10) being further configured to automatically control a manufacturing machine (20) to manufacture the series of parts according to the selected scenario.

15. A system (1) for manufacturing at least one batch of parts comprising at least one type of parts, said system (1) comprising a device (10) according to any of claims 9 to 14 and a manufacturing machine (20) configured to manufacture the parts for all types according to a scenario selected in the set of scenarios determined by the device (10).
